# EUROPÄISCHE PATENTANMELDUNG

(11) **EP 1 471 617 A2**
(43) Veröffentlichungstag der Anmeldung: **27.10.2004**
(21) Anmeldenummer: 04009380.9
(22) Anmeldetag: 21.04.2004
(51) Int. Cl.: H02H 1/00, H02H 7/08

(54) **Elektrische Schaltungsanordnung**

(30) Priorität: 24.04.2003 DE 10318521
(71) Anmelder: Leopold Kostal GmbH & Co. KG, 58507 Lüdenscheid (DE)
(72) Erfinder: Bartling, Ralf, 58239 Schwerte (DE)

(57) **Zusammenfassung**

Beschrieben wird eine elektrische Schaltungsanordnung zur Ansteuerung eines mindestens zweipoligen Wechselspannungsverbrauchers über einen Frequenzumrichter, wobei jede Zuleitung des Verbrauchers über einen steuerbaren Leistungsschalter wechselweise mit jeweils einer von zwei Spannungsversorgungsleitungen verbindbar ist und wobei die Ansteuerung der Leistungsschalter über einen Mikrocontroller erfolgt, wobei je Zuleitung des Verbrauchers zwischen einer der Spannungszuleitungen und einem der Leistungsschalter jeweils ein Shuntwiderstand geschaltet ist und wobei der Mikrocontroller während der Einschaltzeit des mit dem Shuntwiderstand verbundenen Leistungsschalters die an dem Shuntwiderstand abfallende Spannung erfaßt.

Die Schaltungsanordnung zeichnet sich durch besonders kostengünstige Mittel zur Stromüberwachung aus.

## Beschreibung

Die vorliegende Erfindung betrifft eine elektrische Schaltungsanordnung zur Ansteuerung eines mindestens zweipoligen Wechselspannungsverbrauchers über einen Frequenzumrichter, wobei jede Zuleitung des Verbrauchers über einen steuerbaren Leistungsschalter wechselweise mit jeweils einer von zwei Spannungsversorgungsleitungen verbindbar ist und wobei die Ansteuerung der Leistungsschalter über einen Mikrocontroller erfolgt.

Derartige Schaltungsanordnungen sind dafür vorgesehen, mittels einer Brückenschaltung Wechselspannungs- oder Drehstromverbraucher zu versorgen und zu überwachen.

Eine solche Schaltungsanordnung ist in der deutschen Offenlegungsschrift DE 199 12 062 A1 dargestellt. Bei dieser bekannten Schaltungsanordnung sind Strommeßvorrichtungen mit den Zuleitungen des Verbrauchers verbunden.

Nachteilig ist, daß derartige Strommeßvorrichtungen, welche stark wechselnde Potentiale in den Verbraucherzuleitungen auswerten, technisch sehr aufwendig sind und beispielsweise magnetische Übertrager beinhalten. Dadurch ist die vorbekannte Schaltungsanordnung auch relativ kostenaufwendig, was bei einer komplexen Anlage wie der in der Entgegenhaltung beschriebenen Aufzugssteuerung tolerierbar ist.

Beim Einsatz einer gattungsgemäßen Schaltungsanordnung zum Betrieb von massengefertigten elektrischen Geräten, ist es dagegen wünschenswert, die Stromüberwachung kostengünstiger auszubilden.

Es stellte sich daher die Aufgabe, eine Schaltungsanordnung zu schaffen, welche kostengünstigere Mittel zur Stromüberwachung aufweist.

Diese Aufgabe wird erfindungsgemäß dadurch gelöst, daß je Zuleitung des Verbrauchers zwischen einer der Spannungszuleitungen und einem der Leistungsschalter jeweils ein Shuntwiderstand geschaltet ist und daß der Mikrocontroller während der Einschaltzeit des mit dem Shuntwiderstand verbundenen Leistungsschalters die an dem Shuntwiderstand abfallende Spannung erfaßt.

Die Verwendung von Shuntwiderständen ist verglichen mit Stromsensoren in den Verbraucherzuleitungen äußerst kostengünstig. Die Verwendung von Strommeßwiderständen ist an dieser Stelle möglich, da sich das zu erfassenden Potential im Normalbetrieb hier nur wenig verändert. Allerdings ist eine Stromerfassung bedingt durch die Taktung der Strombrücken nur zu bestimmten Zeiten möglich, weshalb hinsichtlich der Strommessung eine Zeitsteuerung erforderlich ist. Da aber sowohl die Taktung der Strombrücken als auch die Stromüberwachung durch einen Mikrocontroller erfolgt, ist diese auf einfache und kostengünstige Weise realisierbar.

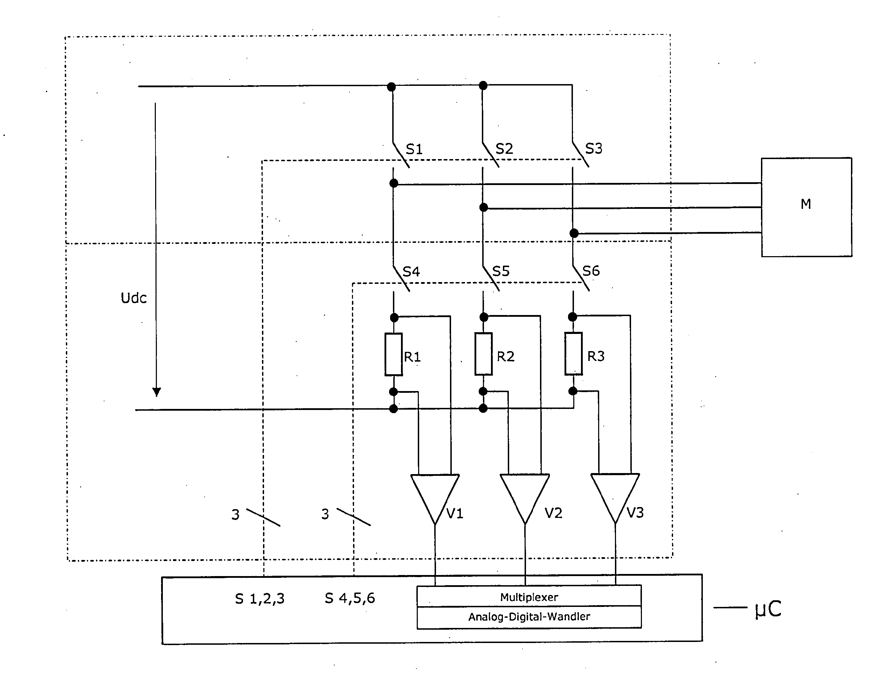

Ein Ausführungsbeispiel der erfindungsgemäßen Schaltungsanordnung ist in der Zeichnung dargestellt und wird im folgenden anhand der Zeichnung näher erläutert.

Die einzige Figur zeigt eine Wechselbrückenschaltung zur Ansteuerung eines Drehstrommotors (M). Hierzu sind drei Umschaltvorrichtungen, bestehend aus jeweils einer Reihenschaltung von zwei Leistungsschaltern (S1, S4; S2, S5; S3, S6) vorgesehen, welche alternierend die drei Anschlüsse des Drehstrommotors (M) mit dem positiven bzw. dem negativen Pol einer Versorgungsgleichspannung (Udc) verbinden.

In diesen Reihenschaltungen ist jeweils zwischen einem der Leistungsschalter (S4, S5, S6) und einem Anschluß der Versorgungsgleichspannung (Udc) ein Shuntwiderstand (R1, R2, R3) geschaltet, an welchem bei eingeschaltetem Leistungsschalter (S4, S5, S6) ein zum Stromfluß in diesem Zweig proportionales Spannungssignal abfällt.

Das Spannungssignal wird zwecks Pegelanpassung über jeweils einen Operationsverstärker (V1, V2, V3) einem Mikrocontroller (µC) zugeführt, welcher die Höhe des Spannungssignals, beispielsweise über einen Analog-Digital-Wandler, auswertet. Vorteilhaft ist, daß der Mikrocontroller (µC) mit nur einem Analog-Digital-Wandler alle drei Wechselbrückenzweige überwachen kann, wenn er eine als Multiplexer wirkende Eingangssteuerung aufweist.

Derselbe Mikrocontroller (µC) steuert auch die Eingänge der Leistungsschalter (S1, S2, S3, S4, S5, S6) an, so daß eine zeitliche Koordination zwischen Ansteuerung und Spannungsmessung auf einfache Weise realisiert ist.

Hierbei ist wesentlich, daß die zu messenden Motorströme nur dann über die Shunt-Widerstände (R1, R2, R3) gemessen werden können, wenn die mit diesen verbundenen Leistungsschalter (S4, S5, S6), in der Praxis ausgeführt als IGBT oder MOSFET, geschlossen sind. Das Meßsignal liegt also nicht zeitkontinuierlich vor, wie es bei Vorrichtungen nach dem Stand der Technik mit Stromsensoren in den Motorzuleitungen der Fall ist, sondern zeitdiskret. Der Mikrocontroller (µC) erzeugt in der Wechselrichterbrücke (S1...S6) ein Ansteuermuster, um den Motor (M) zu betreiben. Da der Mikrocontroller (µC) die Leistungsschalter S4, S5 und S6 steuert, "weiß" er, wann der Motorstrom der entsprechenden Phase über R1, R2 und R3 überhaupt meßbar ist und kann so zum richtigen Zeitpunkt seinen Analog-Diogital-Wandler anstoßen. Daher ist es vorteilhaft, wenn sowohl die signalerzeugende Ansteuereinheit für die Leistungsschalter (S1, S2, S3, S4, S5, S6) als auch die signalerfassende Analog-Digital-Wandlereinheit für die Meßsignale in dem Mikrocontroller (µC) angeordnet sind.

Da die Zeiten, in denen die Schalter S4, S5 und S6 geschlossen sind, sehr kurz sein können, kann der Mikrocontroller (µC) das Ansteuermuster so modifizieren, daß sowohl der Betrieb des Motors (M) gewährleistet ist, als auch die Messung der Ströme über die Shunt-Widerstände (R1, R2, R3) möglich wird. Für den Betrieb des Motors (M) ist ein gewisser zeitlicher Toleranzspielraum im Ansteuermuster möglich, ohne den Betrieb zu gefährden. Dieser Toleranzspielraum wird ausgenutzt, um die Messung über die Shunt-Widerstände (R1, R2, R3) zu ermöglichen.

Die im Ausführungsbeispiel dargestellte Schaltungsanordnung kann dahingehend variiert werden, daß statt drei nur zwei der Brückenzweige durch Strommeßeinrichtungen überwacht werden, da bei einer symmetrischen Belastung der Verbraucherleitungen sich die Stromstärke im dritten Zweig als Summe bzw. Differenz der beiden anderen Zweige ergibt. Die durch Wegfall eines Operationsverstärkers und eines Shuntwiderstands erzielbare Einsparung ist aber vergleichsweise gering, so daß die in der Figur gezeigte Schaltungsanordnung durchaus eine bevorzugte Ausführungsform darstellt, zumal durch die sich ergebene Redundanz der Mikrocontroller die Meßwerte hinsichtlich ihrer Plausibilität überprüfen kann.

Die Versorgungsgleichspannung (Udc) der Wechselrichterbrücke (S1..S6) kann als sogenannte Zwischenkreisspannung aus einem Einphasen- oder auch aus einem Mehrphasenwechselspannungsnetz gewonnen werden, wobei entsprechende Gleichrichterschaltungen vorzusehen sind. Ebenso ist der Betrieb an einer wie auch immer gearteten Gleichstromquelle z. B. über Batterien möglich.

### Bezugszeichen

- µC: Mikrocontroller
- M: Drehstrommotor (Verbraucher)
- R1, R2, R3: Shunt-Widerstände
- S1, S2, S3, S4, S5, S6: Leistungsschalter
- (S1...S6): Wechselrichterbrücke
- Udc: Versorgungsgleichspannung

## Patentansprüche

1. Elektrische Schaltungsanordnung zur Ansteuerung eines mindestens zweipoligen Wechselspannungsverbrauchers über einen Frequenzumrichter,
wobei jede Zuleitung des Verbrauchers über einen steuerbaren Leistungsschalter wechselweise mit jeweils einer von zwei Spannungsversorgungsleitungen verbindbar ist,
wobei die Ansteuerung der Leistungsschalter über einen Mikrocontroller erfolgt,
**dadurch gekennzeichnet,**
**daß** je Zuleitung des Verbrauchers (M) zwischen einer der Spannungszuleitungen und einem der Leistungsschalter (S1, S4; S2, S5; S3, S6) jeweils ein Shuntwiderstand (R1, R2, R3) geschaltet ist und
**daß** der Mikrocontroller (µC) während der Einschaltzeit des mit dem Shuntwiderstand (R1, R2, R3) verbundenen Leistungsschalters (S4, S5, S6) die an dem Shuntwiderstand (R1, R2, R3) abfallende Spannung erfaßt.

2. Elektrische Schaltungsanordnung nach Anspruch 1, **dadurch gekennzeichnet, daß** der Shuntwiderstand (R1, R2, R3) jeweils mit den beiden Eingängen eines Operationsverstärkers verbunden ist, dessen Ausgang an einem zum Mikrocontroller (µC) gehörenden oder mit dem Mikrocontroller (µC) verbundenen Analog-Digital-Wandler anliegt.

3. Elektrische Schaltungsanordnung nach Anspruch 1, **dadurch gekennzeichnet, daß** der Frequenzumrichter dreiphasig ausgebildet ist, wobei der Verbraucher (M) über drei Verbraucherzuleitungen angeschlossen ist.

4. Elektrische Schaltungsanordnung nach Anspruch 3, **dadurch gekennzeichnet, daß** der dreiphasige Frequenzumrichter über die drei Verbraucherzuleitungen angeschlossenen Verbraucher (M) symmetrisch belastet ist.

5. Elektrische Schaltungsanordnung nach einem der Ansprüche 3 oder 4, **dadurch gekennzeichnet, daß** der über die drei Verbraucherzuleitungen angeschlossene Verbraucher (M) als Asynchronmotor ausgebildet ist.

6. Elektrische Schaltungsanordnung nach einem der Ansprüche 1 bis 5, daß in dem mit den Shuntwiderständen (R1, R2, R3) versehenen Schaltungszweig eine Anzahl von Shuntwiderständen (R1, R2, R3) vorgesehen ist, die der um eins reduzierten Anzahl von Zuleitungen entspricht.
